# EUROPEAN PATENT SPECIFICATION

(11) **EP 4 480 357 B1**
(45) Date of publication and mention of the grant of the patent: **18.03.2026**
(21) Application number: 23802832.8
(22) Date of filing: 08.05.2023
(51) Int. Cl.: A47J 31/00, A47J 31/41, A47J 31/44

(54) **MIXING DEVICE AND COFFEE MACHINE**
MISCHVORRICHTUNG UND KAFFEEMASCHINE
DISPOSITIF DE MÉLANGE ET MACHINE À CAFÉ

(30) Priority: 10.05.2022 CN 202210508563
(43) Date of publication of application: 25.12.2024
(73) Proprietor: Kalerm Technology (Suzhou) Co., Ltd, Suzhou Jiangsu 215134 (CN)
(72) Inventor: XU, Qiang, Suzhou, Jiangsu 215000 (CN); JIANG, Weifeng, Suzhou, Jiangsu 215000 (CN); GAO, Yunhua, Suzhou, Jiangsu 215000 (CN)
(74) Representative: Murgitroyd & Company
(86) International application number: PCT/CN2023/092653
(87) International publication number: WO 2023/217060

(56) References cited:
- WO-A1-2018/060191
- CN-A- 103 169 379
- CN-A- 103 169 379
- CN-A- 107 912 982
- CN-A- 111 511 258
- CN-A- 111 565 609
- CN-A- 113 795 181
- CN-U- 217 408 492
- CN-U- 217 408 497
- CN-U- 217 510 290
- CN-U- 217 510 299
- CN-U- 217 592 560
- US-A- 5 473 972
- US-A1- 2020 329 902

## Description

### TECHNICAL FIELD

The present application relates to the field of beverage making technologies, and in particular, to a mixing device and a coffee machine.

### BACKGROUND

Modern coffee making machines are often provided with a container for making foamed milk or hot milk. The container is typically provided with a foaming device adapted to connect to a steam conveying nozzle disposed on a beverage making machine. The foaming device includes a milk conveying pipe, an air pipe, a steam pipe and a mixing cavity, the air pipe and the steam pipe are both connected to the milk conveying pipe, the mixing cavity is also connected to the milk conveying pipe, and a milk outlet is disposed on a lower part of the mixing cavity. During use, steam enters the milk conveying pipe through the steam pipe, to drive milk to flow into the mixing cavity, so that a negative pressure is formed in the milk conveying pipe, micro amount air is sucked into the milk conveying pipe through an air inlet pipe with small-pipe-diameter and is mixed with the milk in the mixing cavity to form milk foam, and the milk foam finally flows out through the milk outlet on the lower part of the mixing cavity, which is used in making cappuccino.

At present, the existing full-automatic coffee machine in the market basically contains a foaming device for making milk-coffee, the foaming device generally adopts a Venturi structure, and the Venturi structure is used to mix the sucked milk with steam, so as to obtain hot milk or milk foam. In order to facilitate conveying of milk, a connector is disposed on an inlet of the milk conveying pipe, a hose is connected to the connector, and when milk foam is made, the hose is inserted into the milk, and the hose automatically sucks the milk after the negative pressure is formed in the milk conveying pipe.

The container for accommodating the milk, the Venturi structure and the milk conveying pipe all need to be cleaned regularly, and since the milk conveying pipe adopts a pipe-like structure, the milk conveying pipe is difficult to thoroughly clean, thereby causing health hazards; in the prior art, the foaming device with the Venturi structure is set to be detachably cleaned, and in a process of foaming the milk, due to the presence of an assembled gap, the milk foam meeting requirements of users cannot be obtained, so that convenient cleaning and high-quality milk foam cannot be simultaneously achieved.

Patent US20200329902A1 provides a mixing apparatus. The mixing apparatus includes a first container, wherein the first container comprises: a first port; and a mixing chamber. The mixing apparatus further includes a second container, wherein the second container is adapted to receive the first container, and a seal disposed between the first container and the second container. In addition, the mixing apparatus includes a channel between the first port and the mixing chamber, wherein the channel is defined by the seal and the first container. In some examples, the seal includes: a first seal portion; and a transition seal portion, the transition portion comprising: a seal split; and an air intake channel, which simplifies the cleaning of milk pipe.

Therefore, further improvements are needed to the prior art.

### SUMMARY

The present application provides a mixing device that is convenient for cleaning and can provide high-quality milk foam.

The present application further provides a coffee machine that is convenient for cleaning and can provide high-quality milk foam.

For achieving the purposes above disclosed, the present application provides a mixing device, including:
a box body including a box bottom and an enclosure wall, the box bottom and the enclosure wall forming an accommodating cavity for holding liquid;
a sealing strip, detachably joined to the enclosure wall to form a liquid conveying channel along a vertical direction between the enclosure wall and the sealing strip; and
a complete Venturi structure disposed on a side of the box body so as to be separable from the box body, the complete Venturi structure including a mixing cavity, a liquid inlet channel connected to the mixing cavity, a steam channel for connecting a steam source and an outlet channel for outputting, the steam channel and the outlet channel being connected to the mixing cavity, and the liquid inlet channel being connected to the accommodating cavity through the liquid conveying channel
wherein the liquid inlet channel comprises a liquid inlet facing a side where the box body is located, the sealing strip extends to cover an outer periphery of the liquid inlet, so as to seal the liquid inlet.

As a further improvement of an embodiment of the present application, the enclosure wall is provided with an opening channel on an outer side, the opening channel extends along the vertical direction, a bottom of the opening channel is connected to the accommodating cavity, the sealing strip is joined to an opening part of the opening channel by means of a sealed manner, and the liquid inlet channel is inserted into the liquid conveying channel from a side of the sealing strip.

As a further improvement of an embodiment of the present application, the liquid conveying channel includes a narrow channel portion; along a direction that the sealing strip is joined to the enclosure wall, a width of the narrow channel portion ranges from one-fourth to one-second of a width of other portions; and a length of the narrow channel portion ranges from one-fifteenth to one-sixth of a total length of the liquid conveying channel, and a distance from the narrow channel portion to an outlet end of the liquid conveying channel ranges from one-twelfth to one-third of a distance from the narrow channel portion to an inlet end of the liquid conveying channel.

As a further improvement of an embodiment of the present application, the mixing device further includes a sealing seat, the sealing seat is detachably connected to the box body, the sealing strip is fixed on the sealing seat, and the Venturi structure is disposed on the sealing seat.

As a further improvement of an embodiment of the present application, the box body is supported on a side of the sealing seat, and the Venturi structure is integrally formed with the sealing seat and protrudes towards a side away from the box body.

As a further improvement of an embodiment of the present application, the sealing seat includes a back plate, the sealing strip is connected to the back plate, the back plate is provided with a first opening portion and a second opening portion on an upper end, the first opening portion and the second opening portion are spaced along a horizontal direction, the steam channel and the outlet channel correspond to a position of the first opening portion and a position of the second opening portion, respectively, positions of the mixing cavity and the liquid inlet channel are located between the first opening portion and the second opening portion, a groove enclosing the liquid inlet channel is disposed between the first opening portion and the second opening portion, and the groove is filled with the sealing strip.

As a further improvement of an embodiment of the present application, the sealing seat is provided with a first limiting portion and a second limiting portion that are spaced along an up-down direction, an upper portion and a lower portion of the box body cooperate with the first limiting portion and the second limiting portion, respectively, and the first limiting portion and the second limiting portion are configured to limit the box body to separating from the sealing seat along a direction that the sealing strip is joined to the enclosure wall.

As a further improvement of an embodiment of the present application, a housing cavity is disposed on a side of the sealing seat, a part of the box body is located in the housing cavity, the housing cavity is enclosed by a top wall, a bottom wall and two side walls connecting the top wall and the bottom wall, the second limiting portion extends from the bottom wall towards a side where the box body is located, and a position, relative to the box body, of the second limiting portion changes under an external force, so as to allow the box body to separate from the sealing seat.

As a further improvement of an embodiment of the present application, the accommodating cavity is provided with an opening on an upper part, the mixing device further includes a box cover movably covered the opening, and a sealing seat, a housing cavity is disposed on a side of the sealing seat, a part of the box body is located in the housing cavity, the housing cavity is enclosed by a top wall, a bottom wall and two side walls connecting the top wall and the bottom wall, a width of the top wall is less than a width of each of the two side walls, the side wall is provided with a step that is flush with an edge of the opening, and a part of the box cover covers the step.

As a further improvement of an embodiment of the present application, the mixing device further includes a discharging pipe connected to the outlet channel and capable of rotating within a preset range around an axis of the outlet channel, and a sealing member is connected between the discharging pipe and the outlet channel.

As a further improvement of an embodiment of the present application, the mixing device further includes a steam connector connected to the steam channel, and a position, relative to the steam channel, of the steam connector is selectively locked along an axial direction of the steam channel.

As a further improvement of an embodiment of the present application, the steam connector includes a steam nozzle and a connector pipe that are detachably connected, the steam nozzle is located inside the steam channel, a part of the connector pipe is located inside the steam channel and is connected to the steam nozzle, and another part of the connector pipe is located outside the steam channel and is used for connecting to the steam source.

As a further improvement of an embodiment of the present application, the mixing device further includes a box cover covered the box body, the Venturi structure is disposed on the box cover, the sealing strip is joined to an inner side of the enclosure wall by means of a sealing manner, so as to form the liquid conveying channel, and the liquid inlet channel is inserted downwards into the liquid conveying channel.

As a further improvement of an embodiment of the present application, the mixing device further includes a discharging pipe connected to the outlet channel, the box body is provided with a connecting opening at a position corresponding to the outlet channel, a part of the discharging pipe extends into an inner side of the connecting opening, a first protrusion extending along a circumferential direction is disposed on an outer side of the discharging pipe, and the first protrusion is clamped to the inner side of the connecting opening; and the connecting opening is provided with a second protrusion on the inner side, a protruding portion is disposed on an end, along the circumferential direction, of the first protrusion, and when the discharging pipe rotates around an axis of the outlet channel to a preset angle, the protruding portion abuts against the second protrusion.

The present application further relates to a coffee machine, the coffee machine includes the mixing device according to any one of the above embodiments, the coffee machine further includes a front panel connected to an outlet assembly, and the mixing device is detachably connected to the front panel and is located on a side of the outlet assembly.

Compared with the prior art, the beneficial effects of the present application are that: the liquid conveying channel is formed by joining the sealing strip to the box body, which solves a problem in that a traditional milk pipe is not easily cleaned, and a design without a milk pipe is combined with the complete Venturi structure, which ensures quality of the made milk foam, thereby meeting requirements of people for pursuing delicate mouthfeel and improving taste.

### BRIEF DESCRIPTION OF THE DRAWINGS

FIG. 1 is a schematic stereoscopic diagram of a mixing device according to an embodiment of the present application.
FIG. 2 is a top view of the mixing device in FIG. 1;
FIG. 3 is a schematic cross-sectional diagram taken along the line A-A in FIG. 2.
FIG. 4 is a schematic enlarged diagram of the part a of the mixing device in FIG. 3.
FIG. 5 is a schematic cross-sectional diagram taken along the line B-B in FIG. 2.
FIG. 6 is a schematic exploded diagram of the mixing device in FIG. 1.
FIG. 7 is a schematic stereoscopic diagram of a sealing seat of the mixing device in FIG. 6.
FIG. 8 is a schematic stereoscopic diagram of a box body of the mixing device in FIG. 6.
FIG. 9 is a schematic stereoscopic diagram of a sealing seat of the mixing device in FIG. 6 with a sealing strip removed.
FIG. 10 is a schematic stereoscopic diagram of a mixing device according to another embodiment of the present application, where a box cover is in an opening state.
FIG. 11 is a schematic cross-sectional diagram of the mixing device in FIG. 10.
FIG. 12 is a schematic stereoscopic diagram of a box body of the mixing device in FIG. 10.
FIG. 13 is a schematic cross-sectional diagram of a mixing device according to yet still another embodiment of the present application.
FIG. 14 is a schematic cross-sectional diagram taken along the line C-C in FIG. 13.
FIG. 15 is a schematic cross-sectional diagram taken along the line D-D in FIG. 14.
FIG. 16 is a schematic cross-sectional diagram of a mixing device according to still another embodiment of the present application.
FIG. 17 is a schematic cross-sectional diagram taken along the line E-E in FIG. 16.
FIG. 18 is a schematic diagram of a coffee machine according to an embodiment of the present application.

### DETAILED DESCRIPTIONS OF THE EMBODIMENTS

The present application may be described in detail below with reference to specific embodiments shown in the accompanying drawings. However, the present application is not limited by these embodiments, and changes in structure, method, or function made by a person of ordinary skill in the art according to these embodiments are all included within the protection scope of the present application.

It should be understood that terms used herein and representing spatial relative positions, such as "up", "above", "down" or "below", are used to easily explain purposes to describe a relationship between one unit or feature and another unit or feature shown in the accompanying drawings. The terms representing the spatial relative positions may be intended to include different orientations of a device during use or operation in addition to the orientations shown in the accompanying drawings.

A mixing device in the embodiments of the present application may be applied to a beverage making machine such as a coffee machine or a tea drink machine, and a mixing device 100 used in a coffee machine is taken as an example for description below. It should be understood that the mixing device in the embodiments of the present application may also be used separately or applied to a beverage making machine such as a tea drink machine.

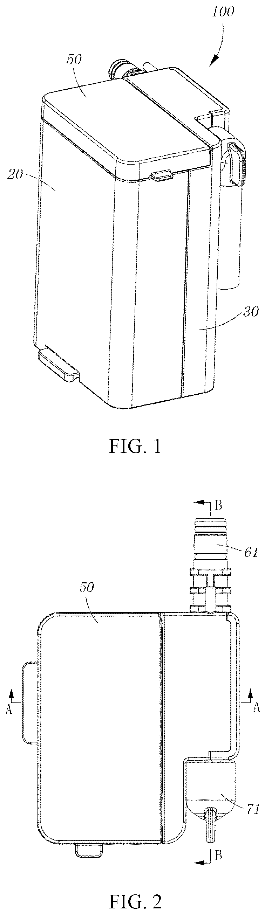

Referring to FIG. 1 to FIG. 4, in a first embodiment, the mixing device 100 includes a box body 20 and a sealing strip 35 connected to the box body 20. The box body 20 includes a box bottom 201 and an enclosure wall 202, the box bottom 201 and the enclosure wall 202 form an accommodating cavity 22 for holding liquid, and milk or other liquid to be mixed may be stored in the accommodating cavity 22 for being mixed. The sealing strip 35 is detachably joined to the enclosure wall 202 along a vertical direction, so as to form a liquid conveying channel 43 between the enclosure wall 202 and the sealing strip 35, which may also be referred to as a design without a milk pipe. The junction between the sealing strip 35 and the enclosure wall 202 may be a sealing connection between the sealing strip 35 and a part of the enclosure wall 202. The liquid conveying channel 43 is formed by two opening parts, and the two opening parts are separated during disassembly, which can achieve a deep cleaning.

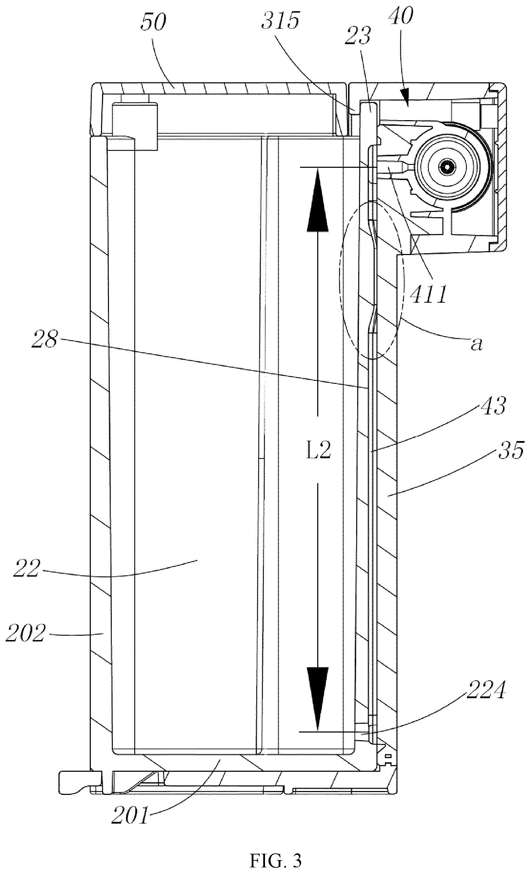

Referring to FIG. 3, FIG. 5 and FIG. 6, the mixing device 100 further includes a Venturi structure 40 separably disposed on a side of the box body 20. The side herein may be an upper side, a front side, a back side, a left side or a right side of the box body 20, and the Venturi structure 40 is an independent and complete structure with respect to the liquid conveying channel 43. In this embodiment, the Venturi structure 40 includes a mixing cavity 41, a liquid inlet channel 411 connected to the mixing cavity 41, a steam channel 42 for connecting a steam source and an outlet channel 44 for outputting, the steam channel 42 and the outlet channel 44 are connected to the mixing cavity 41, and the liquid inlet channel 411 is connected to the accommodating cavity 22 through the liquid conveying channel 43. In other words, the mixing cavity 41 is connected to the accommodating cavity 22 through the liquid inlet channel 411 and liquid conveying channel 43, and liquid in the accommodating cavity 22 may enter the mixing cavity 41 through the liquid conveying channel 43 and the liquid inlet channel 411. The independent and complete Venturi structure 40 may be understood as a structure formed by seamlessly joining the mixing cavity 41, and the steam channel 42, the liquid inlet channel 411 and the outlet channel 44 that are connected to the mixing cavity 41, which may ensure a mixing effect, so as to output milk foam meeting requirements of users.

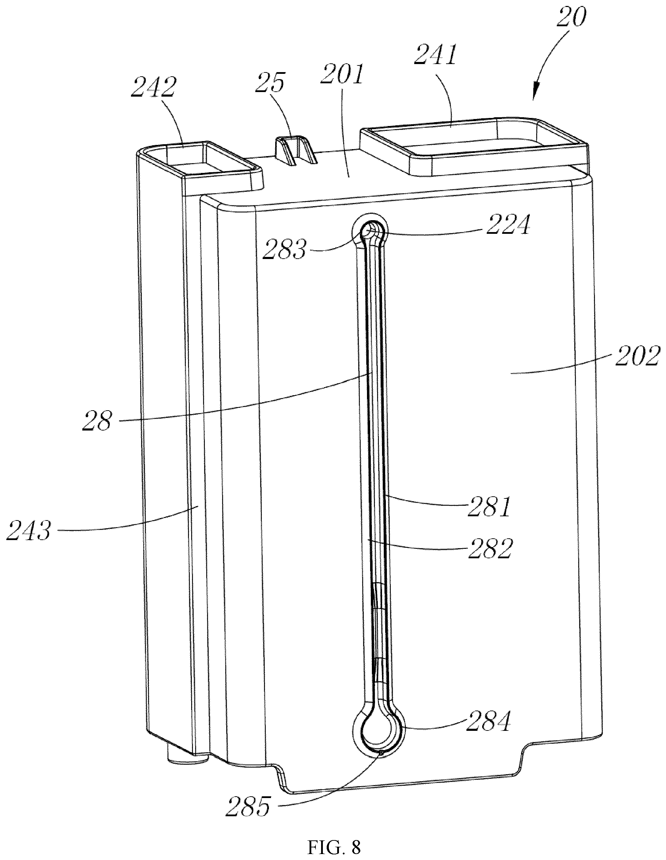

Referring to FIG. 3 and FIG.7 to FIG. 9, in this embodiment, the enclosure wall 202 is provided with an opening channel 28 on an outer side, the opening channel 28 extends along the vertical direction, a bottom of the opening channel 28 is connected to the accommodating cavity 22, the sealing strip 35 is joined to an opening part of the opening channel 28 by means of a sealed manner, and the liquid inlet channel 411 is inserted into the liquid conveying channel 43 from a side of the sealing strip 35. The opening channel 28 is disposed on the outer side of the enclosure wall 202, so that a cleaning is more convenient, and a connection between the opening channel 28 and the sealing strip 35 is more easily operated.

The opening channel 28 is provided with a through hole 224 at the bottom, the through hole 224 is connected to the accommodating cavity 22, and liquid in the accommodating cavity 22 may enter the liquid conveying channel 43 through the through hole 224. The opening channel 28 includes a first convex rib 281 and a second convex rib 282 that are extending along the vertical direction, the first convex rib 281 and the second convex rib 282 are substantially parallel and spaced apart, an end of the first convex rib 281 and an end of the second convex rib 282 are connected to a first convex rib ring 283 by means of a closed manner, another end of the first convex rib 281 and another end of the second convex rib 282 are connected to a second convex rib ring 284 by means of a closed manner, and the through hole 224 is located in the first convex rib ring 283. The liquid inlet channel 411 has a liquid inlet 45 facing a side where the box body 20 is located, the liquid inlet 45 is located within a range limited by the second convex rib ring 284, and the liquid conveying channel 43 connected to the accommodating cavity 22 and the liquid inlet channel 411 is formed by sealing the sealing strip 35, i.e., conveying milk is achieved without a milk pipe. In addition, on the second convex rib ring 284, an air groove 285 is disposed on a position whose height is higher than that of the liquid inlet 45 of the liquid inlet channel 411, the air groove 285 is connected to an inside and an outside of the second convex rib ring 284, and the air groove 285 is preferably disposed on a topmost position on the second convex rib ring 284, so that air may enter the mixing cavity 41 together with liquid, and the mixing cavity 41 is connected to a steam output pipeline inside a coffee machine through the steam channel 42, so that after the liquid and one of steam or air are mixed in the mixing cavity 41, hot milk or milk foam is formed, and then is discharged through the outlet channel 44.

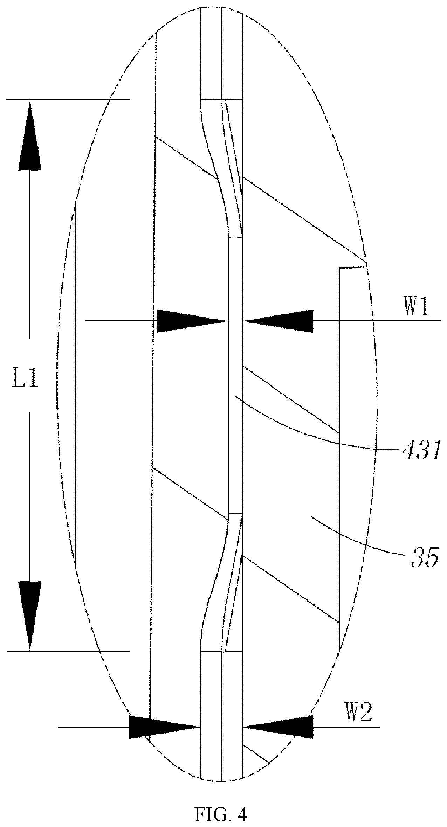

In order to better control a velocity of flow and a volume of flow of liquid entering the mixing cavity 41, the liquid conveying channel 43 includes a narrow channel portion 431, referring to FIG. 3 and FIG. 4, along a direction that the sealing strip 35 is joined to the enclosure wall 202, a width W1 of the narrow channel portion 431 ranges from one-fourth to one-second of a width W2 of other portions; and a length L1 of the narrow channel portion 431 ranges from one-fifteenth to one-sixth of a total length L2 of the liquid conveying channel 43, or a distance from the narrow channel portion 431 to an outlet end of the liquid conveying channel 43 ranges from one-twelfth to one-third of a distance from the narrow channel portion 431 to an inlet end of the liquid conveying channel 43. The narrow channel portion 431 may be transitioned to the other portions through an inclined surface or an arc surface.

Further, referring to FIGS. 1, 3, 5, 6 and 9, the mixing device 100 further includes a sealing seat 30, the sealing seat 30 is detachably connected to the box body 20, and the sealing seat 30 may be configured to assist in supporting the box body 20, so as to facilitate detachable mounting of the mixing device 100 on a coffee machine. The sealing strip 35 is fixed on the sealing seat 30, and the Venturi structure 40 is connected to the sealing seat 30, for example, the Venturi structure 40 is detachably connected to the sealing seat 30. The sealing seat 30 is connected to the sealing strip 35 and the Venturi structure 40, so that an integral structure may be more compact and more reliable. In this embodiment, preferably, the box body 20 is supported on a side of the sealing seat 30, and the Venturi structure 40 is integrally formed with the sealing seat 30 and protrudes towards a side away from the box body 20. The Venturi structure 40 is integrally formed with the sealing seat 30, so that a number of parts during disassembly is reduced, so as to reduce an assembly tolerance, and cleaning the Venturi structure 40 is achieved by holding the sealing seat 30.

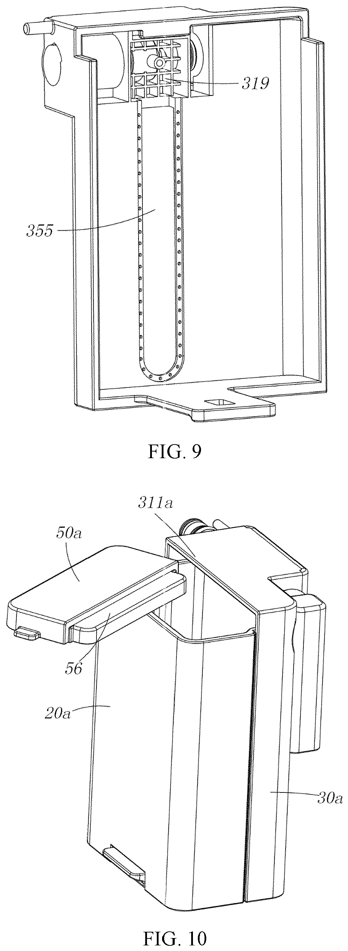

The Venturi structure 40 is disposed on a side, away from the box body 20, of the sealing seat 30, the liquid inlet channel 411 has the liquid inlet 45 facing a side where the box body 20 is located, and the liquid inlet 45 is connected to the liquid conveying channel 43. The sealing strip 35 extends to cover an outer periphery of the liquid inlet 45, which forms the liquid conveying channel 43 while sealing the liquid inlet 45, so that conveying of liquid is more reliable. Specifically, the sealing seat 30 further includes a back plate 316, the sealing strip 35 is connected to the back plate 316, the back plate 316 is provided with a first opening portion 317 and a second opening portion 318 on an upper end, the first opening portion 317 and the second opening portion 318 are spaced along a horizontal direction, the steam channel 42 and the outlet channel 44 correspond to a position of the first opening portion 317 and a position of the second opening portion 318, respectively, positions of the mixing cavity 41 and the liquid inlet channel 411 are located between the first opening portion 317 and the second opening portion 318, a groove 319 enclosing the liquid inlet channel 411 is disposed between the first opening portion 317 and the second opening portion 318, and the groove 319 is filled with the sealing strip 35. A part of the sealing strip 35 is embedded into the groove 319, so that a junction between the sealing strip 35 and the sealing seat 30 is tighter and more reliable, thereby ensuring reliability of the sealing between the liquid conveying channel 43 and the liquid inlet channel 411. Preferably, a plastic-stealing process may be used in a process of forming the groove 319, specifically, as shown in FIG. 9, a plurality of grid structures are disposed inside the groove 319. The sealing strip 35 may be disposed on the sealing seat 30 by bilateral injection molding, or may be a separate sealing strip 35 capable of removing from an opening groove 355 having a matching shape on the sealing seat 30.

Referring to FIG. 3 and FIG. 6 to FIG. 8, the sealing seat 30 is provided with a first limiting portion and a second limiting portion that are spaced along an up-down direction, and an upper portion and a lower portion of the box body 20 cooperate with the first limiting portion and the second limiting portion, respectively. The first limiting portion and the second limiting portion are configured to limit the box body 20 to separating from the sealing seat 30 along a first direction, and the first direction is a direction that the sealing strip 35 is joined to the enclosure wall 202; and a position, relative to the box body, of the second limiting portion changes under an external force, so as to allow the box body 20 to separate from the sealing seat 30. In other words, in a natural state that the second limiting portion is kept in cooperation with the box body 20, the second limiting portion limits the box body 20; and when the second limiting portion has been displaced under the external force, the lower portion of the box body 20 may firstly be disengaged from the second limiting portion, so as to provide a yielding space for the upper portion of the box body 20 being disengaged from the first limiting portion, thereby achieving disengagement between the upper portion of the box body 20 and the first limiting portion, thus finally separating the box body 20 from the sealing seat 30. The supporting of the box body 20 on the sealing seat 30 is limited by the two limiting portions at both upper and lower sides, so that a connection between the box body 20 and the sealing seat 30 is more reliable, and the position, relative to the box body 20, of the second limiting portion changes under the external force, so that the box body 20 may be released from the sealing seat 30, thereby making disassembly and cleaning very convenient and providing a good user experience, while ensuring reliability of the sealing of the liquid conveying channel 43.

Specifically, a housing cavity 31 is disposed on a side of the sealing seat 30, a part of the box body 20 is located in the housing cavity 31, and the housing cavity 31 is enclosed by a top wall 311, a bottom wall 312, and two side walls 313 connecting the top wall 311 and the bottom wall 312. The first limiting portion extends downwards from the top wall 311, and the second limiting portion extends from the bottom wall 312 towards a side where the box body 20 is located, so that when the box body 20 is mounted on the sealing seat 30, only the upper portion of the box body 20 needs to be clamped to a side of the first limiting portion, and then a bottom of the box body 20 cooperates with the second limiting portion, which is convenient and quick to mount; and during disassembly, only a free end of the second limiting portion needs to be operated, i.e., the position, relative to the box body 20, of the second limiting portion changes under the external force, thereby allowing the box body 20 to separate from the sealing seat 30.

A direction from a side wall of the sealing seat 30 to another side wall of the sealing seat 30 is a front-back direction, and a direction perpendicular to the front-back direction and a vertical direction is a left-right direction, or a width direction, i.e., the first direction above mentioned. In this embodiment, the box body 20 is preferably mounted on the sealing seat 30 along the left-right direction, i.e., the box body 20 is inserted into the housing cavity 31 along the width direction of the box body 20, or the box body 20 is taken out from the housing cavity 31 along the width direction of the box body 20 to be separated from the sealing seat 30. The first limiting portion includes a limiting rib 315 protruding downwards from a middle of the top wall 311, a protruding edge 23 extending upwards is disposed on a side wall, close to the sealing seat 30, of the box body 20, and the protruding edge 23 may be clamped to a side of the limiting rib 315, thereby achieving the limiting of the first limiting portion to the upper portion of the box body 20. The second limiting portion includes a supporting plate 34 extending from a middle of the bottom wall 312 to a side where the box body 20 is located, the supporting plate 34 is provided with a slot 341, the box body 20 is provided with a clamping block 25 at a bottom, and the clamping block 25 is inserted into the slot 341, thereby achieving the limiting of the second limiting portion to the lower portion of the box body 20. The supporting plate 34 is a cantilever relative to the sealing seat 30, a free end of the cantilever may deform when subjected to the external force, and therefore, a position, relative to the box body 20, of the cantilever changes, so that the clamping block 25 is easily disengaged from the slot 341 and the box body 20 is no longer limited, and after the external force is released, the supporting plate 34 may reset itself.

Dual limiting at both upper and lower sides is adopted, so that the sealing seat 30 limits the box body 20 along the left-right direction of the box body 20, and the two side walls of the sealing seat 30 limit the box body 20 along the front-back direction, so as to more reliably support the box body 20 on the sealing seat 30, and the separation of the box body 20 and the sealing seat 30 may be achieved only by operating the second limiting portion, thereby making the mounting and disassembly between the box body 20 and the sealing seat 30 very convenient. An edge of the supporting plate 34 exceeds an outer contour of the box body 20, so that the supporting plate 34 may be conveniently operated to disengage the clamping block 25 from the slot 341 through elastic deformation of the supporting plate 34, so as to separate the box body 20 from the sealing seat 30. A direction of an applied force to operate the supporting plate 34 to deform is at an angle to the left-right direction, the edge of the supporting plate 34 is preferably applied to a force along a downward direction, and after the clamping block 25 is disengaged from the slot 341, the protruding edge 23 may also be separated from the limiting rib 315, so that no misoperation occurs.

Certainly, the second limiting portion may also adopt another structure, such as a limiting element pressed by an elastic element, and a position of the limiting element changes when an external force overcomes an elastic force of the elastic element, so as to disengage the limiting element from the lower portion of the box body 20. In the embodiment of the present application, a position change of the second limiting portion may be that a position of the second limiting portion changes based on its material characteristics and under the external force, and the second limiting portion resets after the external force is removed, or may also be that a position of the second limiting portion changes based on its structural characteristics and under the external force, and the second limiting portion resets after the external force is removed.

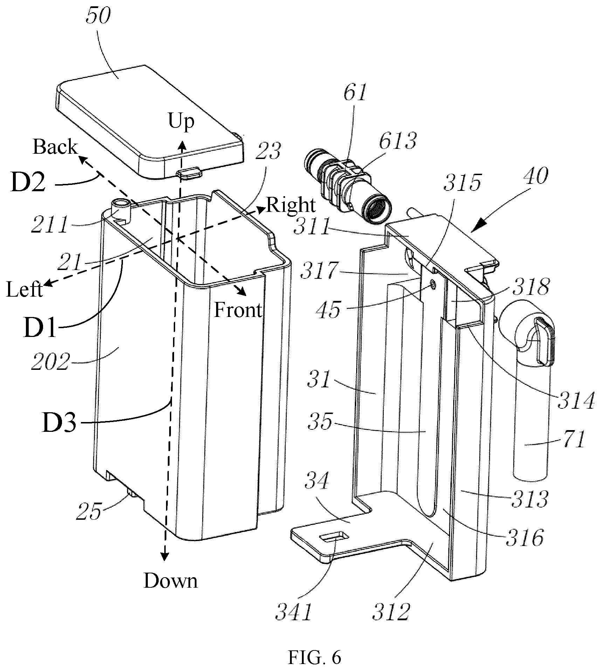

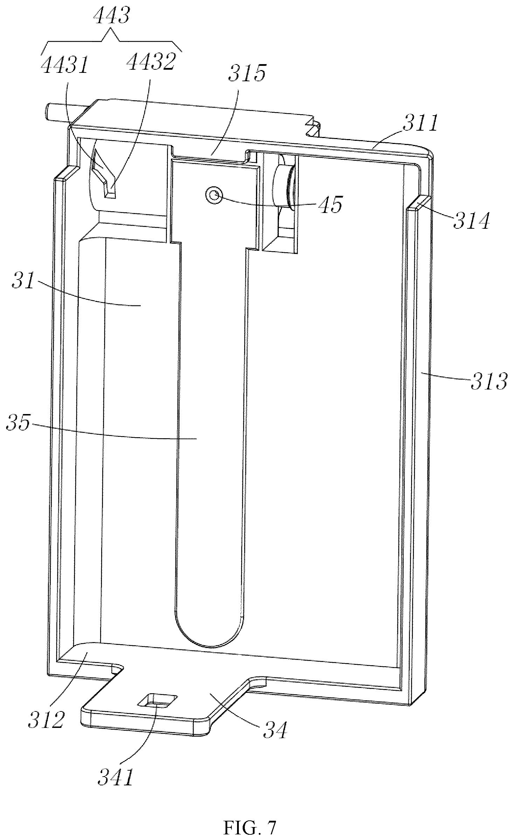

Referring to FIG. 6 and FIG. 7, the protruding edge 23 that cooperates with the first limiting portion is located on a side wall, close to the sealing seat 30, of the box body 20, i.e., a right side wall, the clamping block 25 that cooperates with the second limiting portion is located at a bottom of the box body 20, and the clamping block 25 is preferably disposed on a position close to a left side wall of the box body 20, so that positions where the first limiting portion and the second limiting portion cooperate with the box body 20 are spaced along the width direction of the box body 20, so as to further enhance stability of the supporting of the box body 20 on the sealing seat 30.

In this embodiment, the first limiting portion and the second limiting portion are symmetrical with respect to a center line of the liquid conveying channel 43, respectively, and the center line of the liquid conveying channel 43 is offset towards a side relative to a center line of the box body 20, so that a junction between the sealing seat 30 and the Venturi structure 40 may be more compact, and along a direction perpendicular to an extending direction of the sealing strip 35, both a width of the first limiting portion and a width of the second limiting portion are greater than a width of the sealing strip 35, so that disposal of the first limiting portion and the second limiting portion spaced along the up-down direction may also further ensure reliability of the sealing of the sealing strip 35 to the opening channel 28, so as to avoid leakage of the liquid conveying channel 43, and the sealing strip 35 and the opening channel 28 may also be cleaned more easily after the box body 20 is separated from the sealing seat 30.

In addition, the box body 20 protrudes at a bottom to form a first boss 241 and a second boss 242 that are spaced apart, and the supporting plate 34 is clamped between the first boss 241 and the second boss 242, so as to further limit the supporting of the box body 20 on the sealing seat 30, and a part of the box body 20 may also be supported on the supporting plate 34, so that the supporting of the box body 20 on the sealing seat 30 is more stable. The first boss 241 and the second boss 242 are two square rings that are enclosed on all sides and are located at the bottom of the box body, two sides of the first boss 241 are flush with an outer contour of the box body 20, two sides of the second boss 242 are flush with an outer contour of the box body 20, a side, corresponding to the two bosses, of the box body 20 has step surfaces 243, and the two side walls 313 of the sealing seat 30 just abut against the step surfaces 243, so that an outer contour of the sealing seat 30 is flush with an outer contour of the box body 20, thereby improving aesthetics of appearance and making the positioning of the sealing seat 30 and the box body 20 more accurate.

With continued reference to FIG. 6, the accommodating cavity 22 is provided with an opening 21 on an upper part, and milk or other liquid may be loaded into the accommodating cavity 22 through the opening 21. The mixing device 100 further includes a box cover 50 covered the opening 21, and the box cover 50 is connected to the box body 20 by means of a pivoting connection, so as to operably open or close at least a part of the opening 21, so that the box cover 50 may be opened at any time to add liquid during a beverage making process, and even if there is remaining liquid, the whole mixing device 100 may be taken down from a coffee machine and placed into a refrigerator for storage, thereby prolonging storage time of the liquid, thus avoiding waste.

The box cover 50 is supported on an edge of the opening 21 and rotates relative to the box body 20 around a pivotal shaft 211 disposed along the vertical direction. In other words, the box cover 50 rotates along a horizontal direction, thereby making it easier to add liquid. Certainly, the box cover 50 may also be disposed to flip upwards around a pivotal shaft 211 disposed along a horizontal direction, or the box cover 50 moves to open the opening 21, or the closing of the opening 21 may also be achieved by connecting an edge of the box cover 50 to the opening 21 by means of an insertion connection.

In this embodiment, the box cover 50 is joined to the top wall 311 of the sealing seat 30, so as to jointly close the opening 21, and the top wall 311 of the sealing seat 30 can provide a limiting for rotation of the box cover 50, so as to make opening and closing of the box cover 50 more reliable. In addition, a width of the top wall 311 is less than a width of the side wall 313, the side wall 313 is provided with a step 314 that is flush with an edge of the opening 21, and a part of the box cover 50 covers the step 314, so that a size of an opening part of the opening 21 may be increased, i.e., an area, sheltered by the top wall 311, of the opening 21 is smaller, thereby making it easier to add liquid.

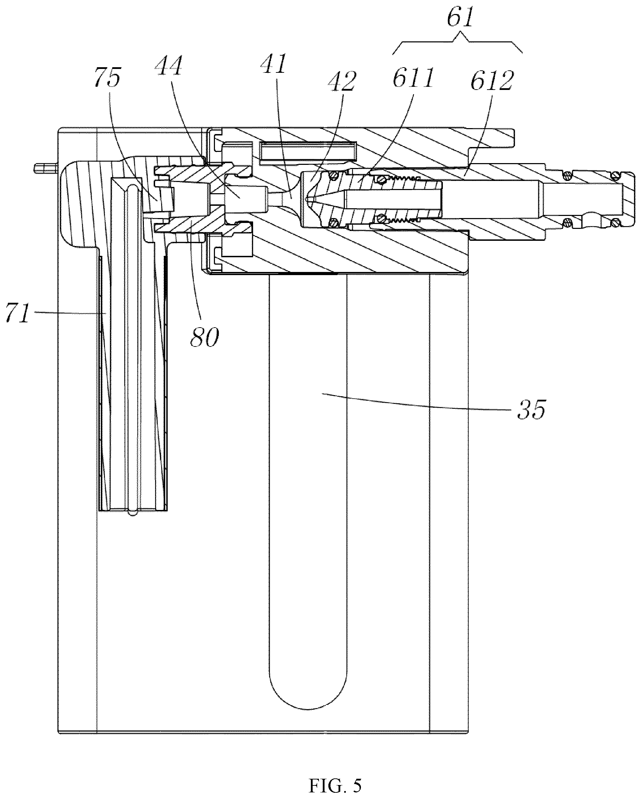

Referring to FIG. 5 to FIG. 7, the Venturi structure 40 includes a complete Venturi pipeline, an axial direction of the steam channel 42 is disposed along the front-back direction, the steam channel 42 is connected to a steam connector 61, and the steam connector 61 may extend into a main body of a coffee machine and is connected to a steam output pipeline in the coffee machine. A position, relative to the steam channel 42, of the steam connector 61 is selectively locked along the axial direction of the steam channel 42. The steam connector 61 includes a steam nozzle 611 and a connector pipe 612 that are detachably connected, the steam nozzle 611 is located inside the steam channel 42, a part of the connector pipe 612 is located inside the steam channel 42 and is connected to the steam nozzle 611, and another part of the connector pipe 612 is located outside the steam channel 42 and is used for connecting to the steam source. A position, relative to the steam channel 42, of the connector pipe 612 is selectively locked along the axial direction of the steam channel 42. The steam connector 61 is set to a type with two sections that are detachable, so as to facilitate a deeper cleaning of the steam connector 61; locking and releasing of the steam channel 42 are achieved through the connector pipe 612, so that the steam connector 61 is easily mounted and is more reliable to use; and when the mixing device 100 is mounted on a beverage device, a position of the steam connector 61 is fixed, so that mounting is more rapid and accurate.

The connector pipe 612 is provided with a bump 613 on an outside, the steam channel 42 is provided with a guiding groove 443 that cooperates with the bump 613, and the guiding groove 443 includes a guiding portion 4431 and an end holding portion 4432. The guiding portion 4431 extends along circumferential and axial directions from an edge of an end of the steam channel 42, an extending direction of the end holding portion 4432 is perpendicular to an axial direction of the steam channel 42, and the connector pipe 612 rotates by means of movement of the bump 613 in the guiding groove 443. Disposal of the guiding groove 443 not only guides the mounting of the steam connector 61, but also locks a position of the steam connector 61 in the steam channel 42, which is simple in structure and more convenient to operate.

Further, the outlet channel 44 is connected to a discharging pipe 71, and the discharging pipe 71 can rotate within a preset range around an axis of the outlet channel 44, so as to adjust an output position. A sealing member 80 is connected between the discharging pipe 71 and the outlet channel 44, a bubble breaker 75 is disposed in the discharging pipe 71, and the bubble breaker 75 is located on a flow path from the sealing member 80 to the discharging pipe 71. Preferably, the bubble breaker 75 and the discharging pipe 71 are integrally formed, and the discharging pipe 71 is connected to the outlet channel 44 through the sealing member 80. Disposal of the bubble breaker 75 may make output milk foam more delicate, so as to improve quality of the milk foam, so that mouthfeel of the made beverage is improved, thereby meeting requirements of users. Moreover, the bubble breaker 75 and the discharging pipe 71 are integrally formed, so as to prevent parts from losing during disassembly and cleaning.

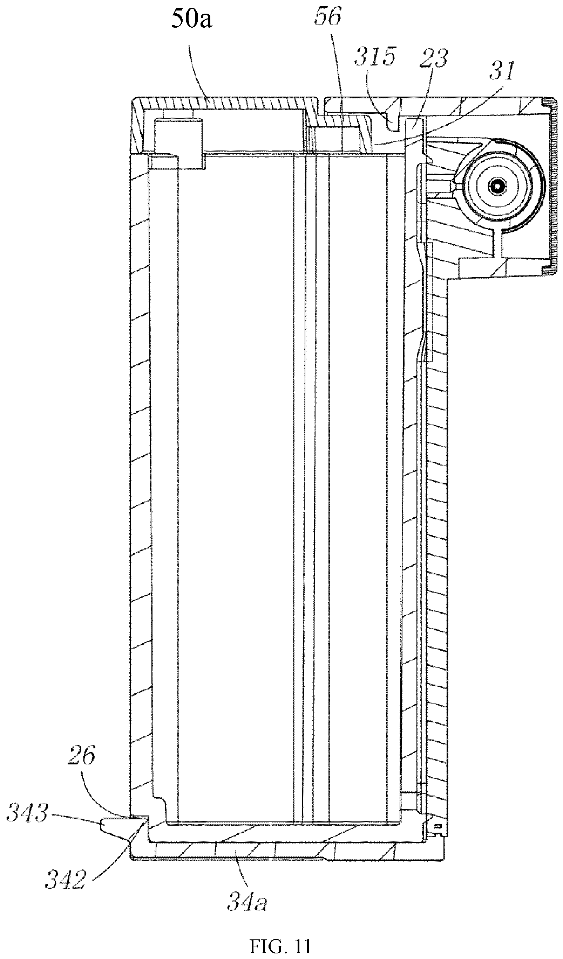

Referring to FIG. 10 to FIG. 12, in another embodiment of the present application, components with the same reference numbers as those in the above embodiments are also similar in structure and function, and details are not described herein again. A first limiting portion also includes a limiting rib 315 protruding downwards from a middle of a top wall 311a, a protruding edge 23 extending upwards is disposed on a side wall, close to a sealing seat 30a, of a box body 20a, and the protruding edge 23 is clamped to a side of the limiting rib 315. A second limiting portion includes a supporting plate 34a extending from a middle of a bottom wall 312 to a side where the box body 20a is located, a position clamping block 342 extending upwards is disposed on an end of the supporting plate 34a, a recess 26 is disposed at a bottom of a side wall of the box body 20a, and the position clamping block 342 is stuck in the recess 26. Similarly, dual limiting at both upper and lower sides is adopted, so that the sealing seat 30a limits the box body 20a along the left-right direction of the box body 20a, and two side walls of the sealing seat 30a limit the box body 20a along the front-back direction, so as to more reliably support the box body 20a on the sealing seat 30a, and the separation of the box body 20a and the sealing seat 30a may be achieved only by operating the second limiting portion, thereby making mounting and disassembly between the box body 20a and the sealing seat 30a very convenient.

In addition, the position clamping block 342 is provided with a protrusion portion 343 protruding outwards along a width direction of the box body 20a. The protrusion portion 343 is disposed, so that the supporting plate 34a may be conveniently operated to disengage the position clamping block 342 from the recess 26 through elastic deformation of the supporting plate 34a, and in this embodiment, the position clamping block 342 is disengaged from the recess 26 by pressing the protrusion portion 343 downwards, so that the protruding edge 23 may also be separated from the limiting rib 315, thereby separating the box body 20a from the sealing seat 30a. The edges, along a width direction, of the top wall 311a, a bottom wall and two side walls that form a housing cavity 31 are flush. A box cover 50a is provided with a sinking portion 56 on a side joined to the top wall 311a, and along a vertical direction of the box body 20a, a size of the sinking portion 56 is less than a size of the box cover 50a, and along a front-back direction of the box body 20a, a size of the sinking portion 56 is less than a size of the box cover 50a. When the box cover 50a is in a closed state, the sinking portion 56 extends into the housing cavity 31, so that the box cover 50a is more stable, thereby avoiding opening the box cover 50a due to vibration or accidents.

Similar to the above embodiments, the protruding edge 23 that cooperates with the first limiting portion is located on the side wall, close to the sealing seat 30a, of the box body 20a, i.e., a right side wall, and the recess 26 that cooperates with the second limiting portion is located on a left side wall of the box body 20a, so that positions where the first limiting portion and the second limiting portion cooperate with the box body 20a are spaced along the width direction of the box body 20a, so as to further enhance stability of the supporting of the box body 20a on the sealing seat 30a.

In addition, the box body 20a also protrudes at a bottom to form a first boss 241 and a second boss 242 that are spaced apart, and the supporting plate 34a is clamped between the first boss 241 and the second boss 242, so as to further limit the supporting of the box body 20a on the sealing seat 30a, and a part of the box body 20a may also be supported on the supporting plate 34a, so that the supporting of the box body 20a on the sealing seat 30a is more stable.

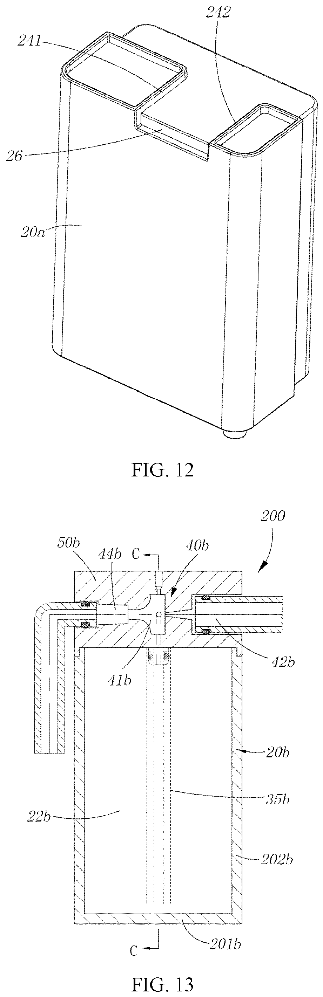

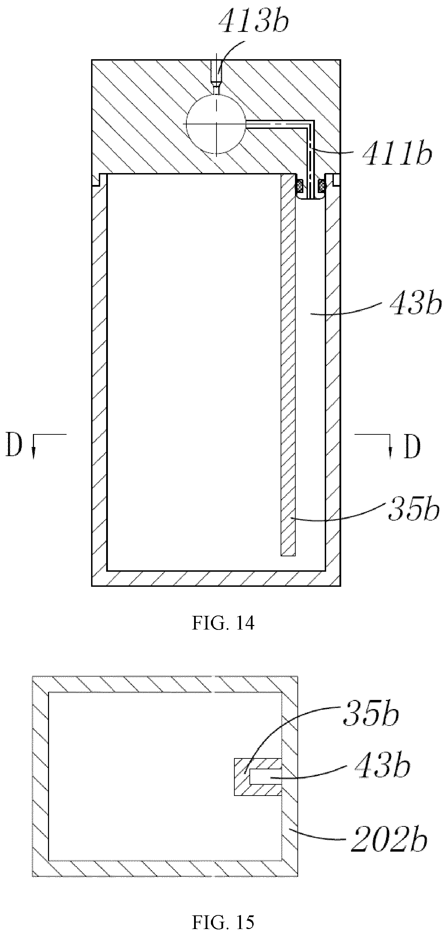

Referring to FIG. 13 to FIG. 15, in yet still another embodiment of the present application, a mixing device 200 includes a box body 20b, a box cover 50b covered the box body 20b, and a sealing strip 35b connected to the box body 20b. The box body 20b includes a box bottom 201b and an enclosure wall 202b. The box bottom 201b and the enclosure wall 202b form an accommodating cavity 22b for holding liquid, and the sealing strip 35b is detachably joined to an inside of the enclosure wall 202b along a vertical direction, so that a liquid conveying channel 43b is formed between the inside of the enclosure wall 202b and the sealing strip 35b. A bottom of the sealing strip 35b is set to be spaced apart from a box bottom 201b or a through hole connected to the accommodating cavity 22b is disposed at a bottom of the sealing strip 35b, so that the liquid in the accommodating cavity 22b enters the liquid conveying channel 43b.

The sealing strip 35b itself is provided with an opening channel extending along the vertical direction, which may be directly joined to the inside of the enclosure wall 202b, to form the liquid conveying channel 43b. Certainly, an opening channel extending along the vertical direction may also be disposed on the inside of the enclosure wall 202b, and the sealing strip 35b is joined to an opening part of the opening channel by means of a sealed manner, to form the liquid conveying channel 43b. Along groove (also known as a sealing groove) joined to the sealing strip 35b may be disposed on the inside of the enclosure wall 202b, and two ends, along a width direction, of the sealing strip 35b may be clamped in the sealing groove, so as to enhance a sealing performance of the liquid conveying channel 43b.

The mixing device 200 further includes a Venturi structure 40b, and the Venturi structure 40b is integrated on the box cover 50b, in other words, the Venturi structure 40b may be detachably connected to the box cover 50b, or may also be integrally formed with the box cover 50b. In this embodiment, the Venturi structure 40b and the box cover 50b are integrally formed. A steam channel 42b and an outlet channel 44b are disposed on opposite ends of a mixing cavity 41b, a liquid inlet channel 411b extends from the mixing cavity 41b along a direction perpendicular to an extending direction of the steam channel 42b or the outlet channel 44b, and extends downwards at a position corresponding to the liquid conveying channel 43b, and extends from a bottom of the box cover 50b to connect to the liquid conveying channel 43b by means of a sealed manner. In this way, the delivery of milk may also be achieved without a milk pipe.

In addition, an air channel 413b connected to the mixing cavity 41b may be further disposed on the box cover 50b, the air channel 413b may be connected to the mixing cavity 41b along a vertical direction, and an opening of the air channel 413b may be disposed upwards. In this embodiment, the Venturi structure 40b is also an independent and complete structure, and is also a structure formed by seamlessly joining the mixing cavity 41b, the steam channel 42b connected to the mixing cavity 41b, the liquid inlet channel 411b and the outlet channel 44b, which may also ensure a mixing effect, so as to output milk foam meeting requirements of users.

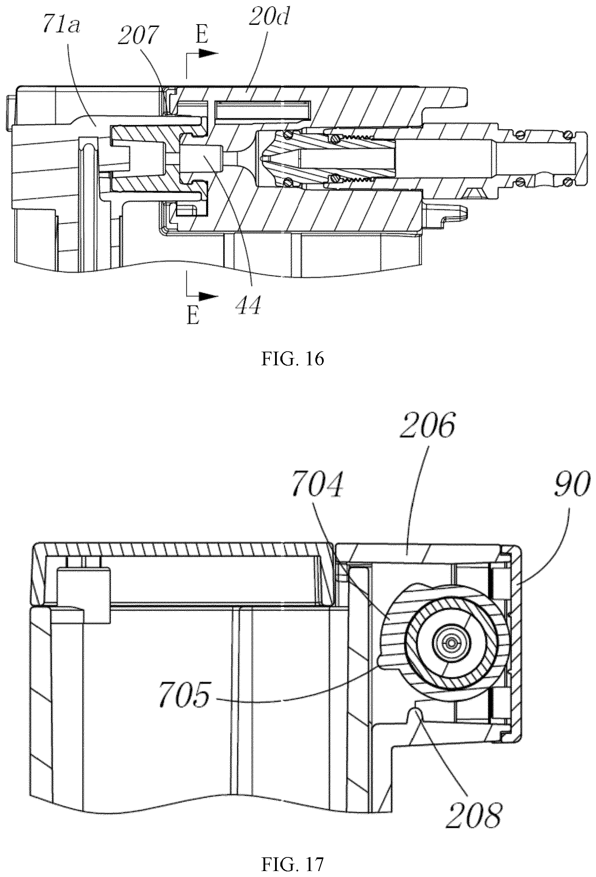

Referring to FIG. 16 and FIG. 17, in still another embodiment of the present application, in addition to structures of a connection portion between a discharging pipe and a box body, other structures of the mixing device 100, 200 are the same as those in the foregoing embodiments, and details are not described herein again. In this embodiment, a discharging pipe 71a is connected to an outlet channel 44, a box body 20d is provided with a connecting opening 207 at a position corresponding to the outlet channel 44, and a part of the discharging pipe 71a extends into an inner side of the connecting opening 207. A first protrusion 704 extending along a circumferential direction is disposed on an outer side of the discharging pipe 71a, and the first protrusion 704 is clamped to the inner side of the connecting opening 207, which may limit the discharging pipe 71a to separating from the box body 20d along an axial direction of the outlet channel 44 within a certain angle range, thereby preventing the discharging pipe 71a from being accidentally pulled out when a dairy product is being made, thus ensuring that users are safer to use. A side of the box body 20d is detachably connected to a cover plate 90, a box wall 206 surrounding the Venturi structure 40 is disposed on a side of the box body 20d, the cover plate 90 covers the box wall 206, a part of the connecting opening 207 is disposed on the box wall 206, another part of the connecting opening 207 may be disposed on the cover plate 90, and the discharging pipe 71a rotates to a point where the first protrusion 704 is located on a side of the cover plate 90, so that the discharging pipe 71a may be separated from the box body 20d along the axial direction of the outlet channel 44.

Further, a second protrusion 208 is disposed on the inner side of the connecting opening 207, a protrusion portion 705 is disposed on an end, along a circumferential direction, of the first protrusion 704, and when the discharging pipe 71a rotates around an axis of the outlet channel 44 to a preset range, the protrusion portion 705 abuts against the second protrusion 208, so as to limit the discharging pipe 71a to continuing to rotate, thereby preventing an outlet from spraying towards users during the making of hot milk foam, further ensuring that users are safe to use. In particular, a rotation angle of the discharging pipe 71a may be limited within a range of 0 to 45 degrees, thereby ensuring safe use.

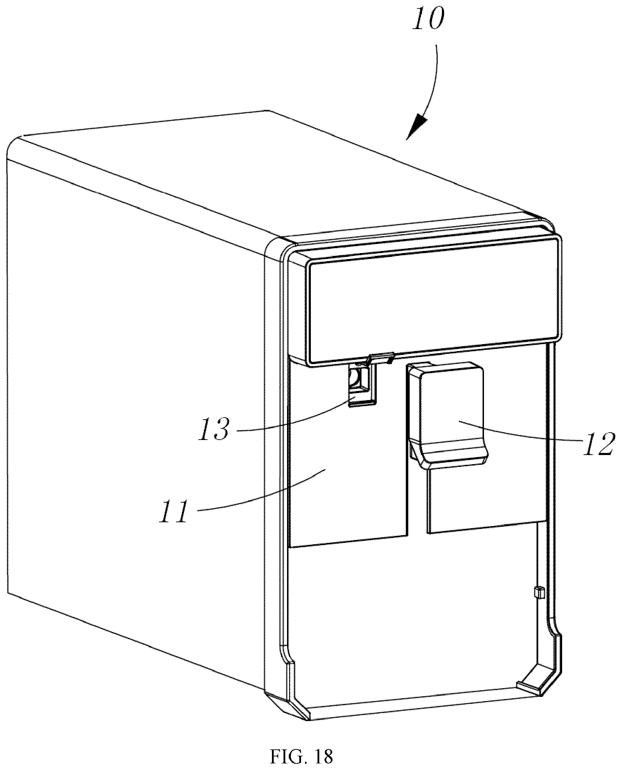

Referring to FIG. 18, the present application further provides a coffee machine 10, including the mixing device 100, 200 in the above embodiments, the coffee machine 10 includes a front panel 11 connected to an outlet assembly 12, and the mixing device 100, 200 is detachably connected to the front panel 11 and is located on a side of the outlet assembly 12. The front panel 11 is provided with a mounting groove 13, and the mixing device 100, 200 may be connected to a steam output pipeline inside the coffee machine 10 by inserting the steam connector 61 into the mounting groove 13. The discharging pipe 71 rotates until the discharging pipe 71 is adjusted to align with a cup below the outlet assembly 12, so that the making of milk-coffee may be achieved.

The mixing device 100, 200 above described is not limited to applications in the coffee machine 10, and may also be used in other beverage brewing devices, such as a tea drinker or other devices for brewing beverages.

In the above embodiments, the liquid conveying channel is formed by joining the sealing strip to the box body, which solves the problem in that a traditional milk pipe is not easily cleaned, and a design without a milk pipe is combined with the complete Venturi structure, which ensures quality of the made milk foam, thereby meeting requirements of people for pursuing delicate mouthfeel and improving taste.

It should be understood that although this specification is described according to the embodiments, but not every embodiment only includes one independent technical solution, this description of the specification is merely for the purposes of clarity, a person skilled in the art should take the specification as a whole, and the technical solutions in the embodiments may also be appropriately combined, to form other embodiments that may be understood by a person skilled in the art.

## Claims

1. A mixing device (100, 200), wherein the mixing device (100, 200) comprises:
a box body (20, 20b, 20d) comprising a box bottom (201, 201b) and an enclosure wall (202, 202b), the box bottom (201, 201b) and the enclosure wall (202, 202b) forming an accommodating cavity (22) for holding liquid;
a sealing strip (35, 35b), detachably joined to the enclosure wall (202, 202b) to form a liquid conveying channel (43, 43b) along a vertical direction between the enclosure wall (202, 202b) and the sealing strip (35, 35b); **characterised in that** the mixing device further comprises:
a complete Venturi structure (40, 40b) disposed on a side of the box body (20, 20b, 20d) so as to be separable from the box body (20, 20b, 20d), the complete Venturi structure (40, 40b) comprising a mixing cavity (41, 41b), a liquid inlet channel (411, 411b) connected to the mixing cavity (41, 41b), a steam channel (42, 42b) for connecting a steam source and an outlet channel (44, 44b) for outputting, the steam channel (42, 42b) and the outlet channel (44, 44b) being connected to the mixing cavity (41, 41b), and the liquid inlet channel (411, 411b) being connected to the accommodating cavity (22) through the liquid conveying channel (43, 43b),
wherein the liquid inlet channel (411, 411b) comprises a liquid inlet (45) facing a side where the box body (20, 20b, 20d) is located, the sealing strip (35, 35b) extends to cover an outer periphery of the liquid inlet (45), so as to seal the liquid inlet (45).

2. The mixing device (100) according to claim 1, wherein the enclosure wall (202) is provided with an opening channel (28) on an outer side, the opening channel (28) extends along the vertical direction, a bottom of the opening channel (28) is connected to the accommodating cavity (22), the sealing strip (35) is joined to an opening part of the opening channel (28) by means of a sealed manner, and the liquid inlet channel (411) is inserted into the liquid conveying channel (43) from a side of the sealing strip (35).

3. The mixing device (100) according to claim 1 or 2, wherein the liquid conveying channel (43) comprises a narrow channel portion (431); along a direction that the sealing strip (35) is joined to the enclosure wall (202), a width of the narrow channel portion (431) ranges from one-fourth to one-second of a width of other portions; and a length of the narrow channel portion (431) ranges from one-fifteenth to one-sixth of a total length of the liquid conveying channel (43), and a distance from the narrow channel portion (431) to an outlet end of the liquid conveying channel (43) ranges from one-twelfth to one-third of a distance from the narrow channel portion (431) to an inlet end of the liquid conveying channel (43).

4. The mixing device (100) according to any one of claims 1 to 3, further comprising a sealing seat (30), wherein the sealing seat (30) is detachably connected to the box body (20), the sealing strip (35) is fixed on the sealing seat (30), and the Venturi structure (40) is disposed on the sealing seat (30).

5. The mixing device (100) according to claim 4, wherein the box body (20) is supported on a side of the sealing seat (30), and the Venturi structure (40) is integrally formed with the sealing seat (30) and protrudes towards a side away from the box body (20).

6. The mixing device (100) according to claim 4 or 5, wherein the sealing seat (30) comprises a back plate (316), the sealing strip (35) is connected to the back plate (316), the back plate (316) is provided with a first opening portion (317) and a second opening portion (318) on an upper end, the first opening portion (317) and the second opening portion (318) are spaced along a horizontal direction, the steam channel (42) and the outlet channel (44) correspond to a position of the first opening portion (317) and a position of the second opening portion (318), respectively, positions of the mixing cavity (41) and the liquid inlet channel (411) are located between the first opening portion (317) and the second opening portion (318), a groove (319) enclosing the liquid inlet channel (411) is disposed between the first opening portion (317) and the second opening portion (318), and the groove (319) is filled with the sealing strip (35).

7. The mixing device (100) according to any one of claims 4 to 6, wherein the sealing seat (30) is provided with a first limiting portion and a second limiting portion that are spaced along an up-down direction, an upper portion and a lower portion of the box body (20) cooperate with the first limiting portion and the second limiting portion, respectively, and the first limiting portion and the second limiting portion are configured to limit the box body (20) to separating from the sealing seat (30) along a direction that the sealing strip (35) is joined to the enclosure wall (202).

8. The mixing device (100) according to claim 7, wherein a housing cavity (31) is disposed on a side of the sealing seat (30), a part of the box body (20) is located in the housing cavity (31), the housing cavity (31) is enclosed by a top wall (311), a bottom wall (312) and two side walls (313) connecting the top wall (311) and the bottom wall (312), the second limiting portion extends from the bottom wall (312) towards a side where the box body (20) is located, and a position, relative to the box body (20), of the second limiting portion changes under an external force, so as to allow the box body (20) to separate from the sealing seat (30).

9. The mixing device (100) according to any one of claims 1 to 8, wherein the accommodating cavity (22) is provided with an opening (21) on an upper part, the mixing device (100) further comprises a box cover (50) movably covered the opening (21), and a sealing seat (30), a housing cavity (31) is disposed on a side of the sealing seat (30), a part of the box body (20) is located in the housing cavity (31), the housing cavity (31) is enclosed by a top wall (311), a bottom wall (312) and two side walls (313) connecting the top wall (311) and the bottom wall (312), a width of the top wall (311) is less than a width of each of the two side walls (313), the side wall (313) is provided with a step (314) that is flush with an edge of the opening (21), and a part of the box cover (50) covers the step (314).

10. The mixing device (100, 200) according to claim 1, further comprising a discharging pipe (71) connected to the outlet channel (44) and capable of rotating within a preset range around an axis of the outlet channel (44), wherein a sealing member (80) is connected between the discharging pipe (71) and the outlet channel (44).

11. The mixing device (100, 200) according to claim 1, further comprising a steam connector (61) connected to the steam channel (42), wherein a position, relative to the steam channel (42), of the steam connector (61) is selectively locked along an axial direction of the steam channel (42).

12. The mixing device (100, 200) according to claim 11, wherein the steam connector (61) comprises a steam nozzle (611) and a connector pipe (612) that are detachably connected, the steam nozzle (611) is located inside the steam channel (42), a part of the connector pipe (612) is located inside the steam channel (42) and is connected to the steam nozzle (611), and another part of the connector pipe (612) is located outside the steam channel (42) and is used for connecting to the steam source.

13. The mixing device (200) according to claim 1, further comprising a box cover (50b) covered the box body (20b), wherein the Venturi structure (40b) is disposed on the box cover (50b), the sealing strip (35b) is joined to an inner side of the enclosure wall (202b) by means of a sealing manner, so as to form the liquid conveying channel (43b), and the liquid inlet channel (411b) is inserted downwards into the liquid conveying channel (43b).

14. The mixing device (100, 200) according to claim 1, further comprising a discharging pipe (71a) connected to the outlet channel (44), wherein the box body (20d) is provided with a connecting opening (207) at a position corresponding to the outlet channel (44), a part of the discharging pipe (71a) extends into an inner side of the connecting opening (207), a first protrusion (704) extending along a circumferential direction is disposed on an outer side of the discharging pipe (71a), and the first protrusion (704) is clamped to the inner side of the connecting opening (207); and the connecting opening (207) is provided with a second protrusion (208) on the inner side, a protruding portion (705) is disposed on an end, along the circumferential direction, of the first protrusion (704), and when the discharging pipe (71a) rotates around an axis of the outlet channel (44) to a preset angle, the protruding portion (705) abuts against the second protrusion (208).

15. A coffee machine (10), comprising the mixing device (100, 200) according to any one of claims 1 to 14, wherein the coffee machine (10) further comprises a front panel (11) connected to an outlet assembly (12), and the mixing device (100, 200) is detachably connected to the front panel (11) and is located on a side of the outlet assembly (12).

## Patentansprüche

1. Eine Mischvorrichtung (100, 200), wobei die Mischvorrichtung (100, 200) Folgendes beinhaltet:
einen Kastenkörper (20, 20b, 20d), der einen Kastenboden (201, 201b) und eine Gehäusewand (202, 202b) beinhaltet, wobei der Kastenboden (201, 201b) und die Gehäusewand (202, 202b) einen Aufnahmehohlraum (22) zum Halten von Flüssigkeit bilden;
einen Dichtungsstreifen (35, 35b), der lösbar mit der Gehäusewand (202, 202b) verknüpft ist, um einen Flüssigkeitsförderkanal (43, 43b) entlang einer vertikalen Richtung zwischen der Gehäusewand (202, 202b) und dem Dichtungsstreifen (35, 35b) zu bilden; **dadurch gekennzeichnet, dass** die Mischvorrichtung ferner Folgendes beinhaltet:
eine vollständige Venturi-Struktur (40, 40b), die auf einer Seite des Kastenkörpers (20, 20b, 20d) angeordnet ist, um von dem Kastenkörper (20, 20b, 20d) trennbar zu sein,
wobei die vollständige Venturi-Struktur (40, 40b) einen Mischhohlraum (41, 41b), einen Flüssigkeitseinlasskanal (411, 411b), der mit dem Mischhohlraum (41, 41b) verbunden ist, einen Dampfkanal (42, 42b) zum Verbinden einer Dampfquelle und einen Auslasskanal (44, 44b) zum Ausgeben beinhaltet, wobei der Dampfkanal (42, 42b) und der Auslasskanal (44, 44b) mit dem Mischhohlraum (41, 41b) verbunden sind und der Flüssigkeitseinlasskanal (411, 411b) mit dem Aufnahmehohlraum (22) durch den Flüssigkeitsförderkanal (43, 43b) verbunden ist,
wobei der Flüssigkeitseinlasskanal (411, 411b) einen Flüssigkeitseinlass (45) beinhaltet, der einer Seite zugewandt ist, auf der sich der Kastenkörper (20, 20b, 20d) befindet, wobei sich der Dichtungsstreifen (35, 35b) erstreckt, um einen Außenumfang des Flüssigkeitseinlasses (45) abzudecken, um den Flüssigkeitseinlass (45) abzudichten.

2. Mischvorrichtung (100) gemäß Anspruch 1, wobei die Gehäusewand (202) mit einem Öffnungskanal (28) auf einer Außenseite versehen ist, sich der Öffnungskanal (28) entlang der vertikalen Richtung erstreckt, ein Boden des Öffnungskanals (28) mit dem Aufnahmehohlraum (22) verbunden ist, der Dichtungsstreifen (35) mit einem Öffnungsteil des Öffnungskanals (28) mittels einer abgedichteten Weise verknüpft ist und der Flüssigkeitseinlasskanal (411) in den Flüssigkeitsförderkanal (43) von einer Seite des Dichtungsstreifens (35) eingesetzt ist.

3. Mischvorrichtung (100) gemäß Anspruch 1 oder 2, wobei der Flüssigkeitsförderkanal (43) einen schmalen Kanalabschnitt (431) beinhaltet; entlang einer Richtung, in der der Dichtungsstreifen (35) mit der Gehäusewand (202) verknüpft ist, eine Breite des schmalen Kanalabschnitts (431) von einem Viertel bis zu einem Zweitel einer Breite anderer Abschnitte reicht; und eine Länge des schmalen Kanalabschnitts (431) von einem Fünfzehntel bis zu einem Sechstel einer Gesamtlänge des Flüssigkeitsförderkanals (43) reicht und ein Abstand von dem schmalen Kanalabschnitt (431) zu einem Auslassende des Flüssigkeitsförderkanals (43) von einem Zwölftel bis zu einem Drittel eines Abstands von dem schmalen Kanalabschnitt (431) zu einem Einlassende des Flüssigkeitsförderkanals (43) reicht.

4. Mischvorrichtung (100) gemäß einem der Ansprüche 1 bis 3, ferner beinhaltet einen Dichtungssitz (30), wobei der Dichtungssitz (30) lösbar mit dem Kastenkörper (20) verbunden ist, der Dichtungsstreifen (35) an dem Dichtungssitz (30) befestigt ist und die Venturi-Struktur (40) an dem Dichtungssitz (30) angeordnet ist.

5. Mischvorrichtung (100) gemäß Anspruch 4, wobei der Kastenkörper (20) auf einer Seite des Dichtungssitzes (30) gestützt ist und die Venturi-Struktur (40) integral mit dem Dichtungssitz (30) ausgebildet ist und in Richtung einer Seite weg von dem Kastenkörper (20) vorsteht.

6. Mischvorrichtung (100) gemäß Anspruch 4 oder 5, wobei der Dichtungssitz (30) eine Rückplatte (316) beinhaltet, der Dichtungsstreifen (35) mit der Rückplatte (316) verbunden ist, die Rückplatte (316) mit einem ersten Öffnungsabschnitt (317) und einem zweiten Öffnungsabschnitt (318) an einem oberen Ende versehen ist, der erste Öffnungsabschnitt (317) und der zweite Öffnungsabschnitt (318) entlang einer horizontalen Richtung beabstandet sind, der Dampfkanal (42) und der Auslasskanal (44) einer Position des ersten Öffnungsabschnitts (317) bzw. einer Position des zweiten Öffnungsabschnitts (318) entsprechen, sich Positionen des Mischhohlraums (41) und des Flüssigkeitseinlasskanals (411) zwischen dem ersten Öffnungsabschnitt (317) und dem zweiten Öffnungsabschnitt (318) befinden, eine Nut (319), die den Flüssigkeitseinlasskanal (411) umschließt, zwischen dem ersten Öffnungsabschnitt (317) und dem zweiten Öffnungsabschnitt (318) angeordnet ist und die Nut (319) mit dem Dichtungsstreifen (35) gefüllt ist.

7. Mischvorrichtung (100) gemäß einem der Ansprüche 4 bis 6, wobei der Dichtungssitz (30) mit einem ersten Begrenzungsabschnitt und einem zweiten Begrenzungsabschnitt versehen ist, die entlang einer Oben-Unten-Richtung beabstandet sind, ein oberer Abschnitt und ein unterer Abschnitt des Kastenkörpers (20) mit dem ersten Begrenzungsabschnitt bzw. dem zweiten Begrenzungsabschnitt zusammenwirken und der erste Begrenzungsabschnitt und der zweite Begrenzungsabschnitt konfiguriert sind, um den Kastenkörper (20) auf ein Trennen von dem Dichtungssitz (30) entlang einer Richtung zu begrenzen, in der der Dichtungsstreifen (35) mit der Gehäusewand (202) verknüpft ist.

8. Mischvorrichtung (100) gemäß Anspruch 7, wobei ein Gehäusehohlraum (31) auf einer Seite des Dichtungssitzes (30) angeordnet ist, sich ein Teil des Kastenkörpers (20) in dem Gehäusehohlraum (31) befindet, der Gehäusehohlraum (31) von einer oberen Wand (311), einer unteren Wand (312) und zwei Seitenwänden (313), die die obere Wand (311) und die untere Wand (312) verbinden, umschlossen ist, sich der zweite Begrenzungsabschnitt von der unteren Wand (312) in Richtung einer Seite erstreckt, auf der sich der Kastenkörper (20) befindet, und sich eine Position, relativ zu dem Kastenkörper (20), des zweiten Begrenzungsabschnitts unter einer äußeren Kraft ändert, um es dem Kastenkörper (20) zu ermöglichen, sich von dem Dichtungssitz (30) zu trennen.

9. Mischvorrichtung (100) gemäß einem der Ansprüche 1 bis 8, wobei der Aufnahmehohlraum (22) mit einer Öffnung (21) auf einem oberen Teil versehen ist, die Mischvorrichtung (100) ferner eine Kastenabdeckung (50), die die Öffnung (21) beweglich abdeckt, und einen Dichtungssitz (30) beinhaltet, ein Gehäusehohlraum (31) auf einer Seite des Dichtungssitzes (30) angeordnet ist, sich ein Teil des Kastenkörpers (20) in dem Gehäusehohlraum (31) befindet, der Gehäusehohlraum (31) von einer oberen Wand (311), einer unteren Wand (312) und zwei Seitenwänden (313), die die obere Wand (311) und die untere Wand (312) verbinden, umschlossen ist, eine Breite der oberen Wand (311) kleiner als eine Breite jeder der zwei Seitenwände (313) ist, die Seitenwand (313) mit einer Stufe (314) versehen ist, die mit einem Rand der Öffnung (21) bündig ist, und ein Teil der Kastenabdeckung (50) die Stufe (314) abdeckt.

10. Mischvorrichtung (100, 200) gemäß Anspruch 1, ferner beinhaltend ein Abflussrohr (71), das mit dem Auslasskanal (44) verbunden ist und in der Lage ist, sich innerhalb eines voreingestellten Bereichs um eine Achse des Auslasskanals (44) zu drehen, wobei ein Dichtungselement (80) zwischen dem Auslassrohr (71) und dem Auslasskanal (44) verbunden ist.

11. Mischvorrichtung (100, 200) gemäß Anspruch 1, ferner beinhaltend einen Dampfverbinder (61), der mit dem Dampfkanal (42) verbunden ist, wobei eine Position, relativ zu dem Dampfkanal (42), des Dampfverbinders (61) selektiv entlang einer axialen Richtung des Dampfkanals (42) verriegelt ist.

12. Mischvorrichtung (100, 200) gemäß Anspruch 11, wobei der Dampfverbinder (61) eine Dampfdüse (611) und ein Verbindungsrohr (612), die lösbar verbunden sind, beinhaltet, wobei sich die Dampfdüse (611) innerhalb des Dampfkanals (42) befindet, sich ein Teil des Verbindungsrohrs (612) innerhalb des Dampfkanals (42) befindet und mit der Dampfdüse (611) verbunden ist und sich ein anderer Teil des Verbindungsrohrs (612) außerhalb des Dampfkanals (42) befindet und zum Verbinden mit der Dampfquelle verwendet wird.

13. Mischvorrichtung (200) gemäß Anspruch 1, ferner beinhaltend eine Kastenabdeckung (50b), die den Kastenkörper (20b) abdeckt, wobei die Venturi-Struktur (40b) auf der Kastenabdeckung (50b) angeordnet ist, der Dichtungsstreifen (35b) mit einer Innenseite der Gehäusewand (202b) mittels einer abdichtenden Weise verknüpft ist, um den Flüssigkeitsförderkanal (43b) zu bilden, und der Flüssigkeitseinlasskanal (411b) nach unten in den Flüssigkeitsförderkanal (43b) eingesetzt ist.

14. Mischvorrichtung (100, 200) gemäß Anspruch 1, ferner beinhaltend ein Abflussrohr (71a), das mit dem Auslasskanal (44) verbunden ist, wobei der Kastenkörper (20d) mit einer Verbindungsöffnung (207) an einer Position versehen ist, die dem Auslasskanal (44) entspricht, sich ein Teil des Abflussrohrs (71a) in eine Innenseite der Verbindungsöffnung (207) erstreckt, ein erster Vorsprung (704), der sich entlang einer Umfangsrichtung erstreckt, auf einer Außenseite des Abflussrohrs (71a) angeordnet ist und der erste Vorsprung (704) an der Innenseite der Verbindungsöffnung (207) festgeklemmt ist; und die Verbindungsöffnung (207) mit einem zweiten Vorsprung (208) auf der Innenseite versehen ist, ein vorstehender Abschnitt (705) an einem Ende, entlang der Umfangsrichtung, des ersten Vorsprungs (704) angeordnet ist und, wenn sich das Abflussrohr (71a) um eine Achse des Auslasskanals (44) bis zu einem voreingestellten Winkel dreht, der vorstehende Abschnitt (705) an dem zweiten Vorsprung (208) anstößt.

15. Eine Kaffeemaschine (10), beinhaltend die Mischvorrichtung (100, 200) gemäß einem der Ansprüche 1 bis 14, wobei die Kaffeemaschine (10) ferner eine Frontplatte (11), die mit einer Auslassanordnung (12) verbunden ist, beinhaltet und die Mischvorrichtung (100, 200) lösbar mit der Frontplatte (11) verbunden ist und sich auf einer Seite der Auslassanordnung (12) befindet.

## Revendications

1. Un dispositif de mélange (100, 200), le dispositif de mélange (100, 200) comprenant :
un corps formant boîte (20, 20b, 20d) comprenant un fond de boîte (201, 201b) et une paroi d'enceinte (202, 202b), le fond de boîte (201, 201b) et la paroi d'enceinte (202, 202b) formant une cavité de réception (22) destinée à contenir du liquide ;
une bande d'étanchéité (35, 35b), jointe de façon détachable à la paroi d'enceinte (202, 202b) pour former un canal d'acheminement de liquide (43, 43b) le long d'une direction verticale entre la paroi d'enceinte (202, 202b) et la bande d'étanchéité (35, 35b) ;
**caractérisé en ce que** le dispositif de mélange comprend en outre :
une structure Venturi complète (40, 40b) disposée sur un côté du corps formant boîte (20, 20b, 20d) de sorte à pouvoir être séparée du corps formant boîte (20, 20b, 20d), la structure Venturi complète (40, 40b) comprenant une cavité de mélange (41, 41b), un canal d'entrée de liquide (411, 411b) raccordé à la cavité de mélange (41, 41b), un canal de vapeur (42, 42b) destiné à raccorder une source de vapeur et un canal de sortie (44, 44b) destiné à délivrer en sortie, le canal de vapeur (42, 42b) et le canal de sortie (44, 44b) étant raccordés à la cavité de mélange (41, 41b), et le canal d'entrée de liquide (411, 411b) étant raccordé à la cavité de réception (22) par le biais du canal d'acheminement de liquide (43, 43b),
dans lequel le canal d'entrée de liquide (411, 411b) comprend une entrée de liquide (45) faisant face à un côté où le corps formant boîte (20, 20b, 20d) est situé, la bande d'étanchéité (35, 35b) s'étend pour recouvrir une périphérie extérieure de l'entrée de liquide (45), de sorte à rendre étanche l'entrée de liquide (45).

2. Le dispositif de mélange (100) selon la revendication 1, dans lequel la paroi d'enceinte (202) est pourvue d'un canal d'ouverture (28) sur un côté extérieur, le canal d'ouverture (28) s'étend le long de la direction verticale, un fond du canal d'ouverture (28) est raccordé à la cavité de réception (22), la bande d'étanchéité (35) est jointe à une partie d'ouverture du canal d'ouverture (28) au moyen d'une manière étanche, et le canal d'entrée de liquide (411) est inséré dans le canal d'acheminement de liquide (43) depuis un côté de la bande d'étanchéité (35).

3. Le dispositif de mélange (100) selon la revendication 1 ou la revendication 2, dans lequel le canal d'acheminement de liquide (43) comprend une portion de canal étroite (431) ; le long d'une direction dans laquelle la bande d'étanchéité (35) est jointe à la paroi d'enceinte (202), une largeur de la portion de canal étroite (431) va d'un quart à un demi d'une largeur d'autres portions ; et une longueur de la portion de canal étroite (431) va d'un quinzième à un sixième d'une longueur totale du canal d'acheminement de liquide (43), et une distance de la portion de canal étroite (431) à une extrémité de sortie du canal d'acheminement de liquide (43) va d'un douzième à un tiers d'une distance de la portion de canal étroite (431) à une extrémité d'entrée du canal d'acheminement de liquide (43).

4. Le dispositif de mélange (100) selon l'une quelconque des revendications 1 à 3, comprenant en outre un siège d'étanchéité (30), le siège d'étanchéité (30) étant raccordé de façon détachable au corps formant boîte (20), la bande d'étanchéité (35) étant fixée sur le siège d'étanchéité (30), et la structure Venturi (40) étant disposée sur le siège d'étanchéité (30).

5. Le dispositif de mélange (100) selon la revendication 4, dans lequel le corps formant boîte (20) est soutenu sur un côté du siège d'étanchéité (30), et la structure Venturi (40) est formée d'un seul tenant avec le siège d'étanchéité (30) et fait saillie vers un côté éloigné du corps formant boîte (20).

6. Le dispositif de mélange (100) selon la revendication 4 ou la revendication 5, dans lequel le siège d'étanchéité (30) comprend une plaque arrière (316), la bande d'étanchéité (35) est raccordée à la plaque arrière (316), la plaque arrière (316) est pourvue d'une première portion d'ouverture (317) et d'une deuxième portion d'ouverture (318) sur une extrémité supérieure, la première portion d'ouverture (317) et la deuxième portion d'ouverture (318) sont espacées le long d'une direction horizontale, le canal de vapeur (42) et le canal de sortie (44) correspondent à une position de la première portion d'ouverture (317) et à une position de la deuxième portion d'ouverture (318), respectivement, des positions de la cavité de mélange (41) et du canal d'entrée de liquide (411) sont situées entre la première portion d'ouverture (317) et la deuxième portion d'ouverture (318), une rainure (319) ceignant le canal d'entrée de liquide (411) est disposée entre la première portion d'ouverture (317) et la deuxième portion d'ouverture (318), et la rainure (319) est remplie avec la bande d'étanchéité (35).

7. Le dispositif de mélange (100) selon l'une quelconque des revendications 4 à 6, dans lequel le siège d'étanchéité (30) est pourvu d'une première portion de limitation et d'une deuxième portion de limitation qui sont espacées le long d'une direction haut-bas, une portion supérieure et une portion inférieure du corps formant boîte (20) coopèrent avec la première portion de limitation et la deuxième portion de limitation, respectivement, et la première portion de limitation et la deuxième portion de limitation sont configurées pour limiter la séparation du corps formant boîte (20) d'avec le siège d'étanchéité (30) le long d'une direction dans laquelle la bande d'étanchéité (35) est jointe à la paroi d'enceinte (202).

8. Le dispositif de mélange (100) selon la revendication 7, dans lequel une cavité de logement (31) est disposée sur un côté du siège d'étanchéité (30), une partie du corps formant boîte (20) est située dans la cavité de logement (31), la cavité de logement (31) est ceinte par une paroi de dessus (311), une paroi de fond (312) et deux parois de côté (313) raccordant la paroi de dessus (311) et la paroi de fond (312), la deuxième portion de limitation s'étend depuis la paroi de fond (312) vers un côté où le corps formant boîte (20) est situé, et une position, relative au corps formant boîte (20), de la deuxième portion de limitation change sous une force externe, de sorte à permettre au corps formant boîte (20) de se séparer du siège d'étanchéité (30).

9. Le dispositif de mélange (100) selon l'une quelconque des revendications 1 à 8, dans lequel la cavité de réception (22) est pourvue d'une ouverture (21) sur une partie supérieure, le dispositif de mélange (100) comprend en outre un couvercle de boîte (50) recouvrant de façon mobile l'ouverture (21), et un siège d'étanchéité (30), une cavité de logement (31) est disposée sur un côté du siège d'étanchéité (30), une partie du corps formant boîte (20) est située dans la cavité de logement (31), la cavité de logement (31) est ceinte par une paroi de dessus (311), une paroi de fond (312) et deux parois de côté (313) raccordant la paroi de dessus (311) et la paroi de fond (312), une largeur de la paroi de dessus (311) est plus petite qu'une largeur de chacune des deux parois de côté (313), la paroi de côté (313) est pourvue d'un gradin (314) qui est de niveau avec un bord de l'ouverture (21), et une partie du couvercle de boîte (50) recouvre le gradin (314).

10. Le dispositif de mélange (100, 200) selon la revendication 1, comprenant en outre un tuyau d'évacuation (71) raccordé au canal de sortie (44) et capable de tourner dans une plage prédéfinie autour d'un axe du canal de sortie (44), dans lequel un élément d'étanchéité (80) est raccordé entre le tuyau d'évacuation (71) et le canal de sortie (44).

11. Le dispositif de mélange (100, 200) selon la revendication 1, comprenant en outre un raccord de vapeur (61) raccordé au canal de vapeur (42), dans lequel une position, relative au canal de vapeur (42), du raccord de vapeur (61) est sélectivement verrouillée le long d'une direction axiale du canal de vapeur (42).

12. Le dispositif de mélange (100, 200) selon la revendication 11, dans lequel le raccord de vapeur (61) comprend une buse de vapeur (611) et un tuyau de raccord (612) qui sont raccordés de façon détachable, la buse de vapeur (611) est située à l'intérieur du canal de vapeur (42), une partie du tuyau de raccord (612) est située à l'intérieur du canal de vapeur (42) et est raccordée à la buse de vapeur (611), et une autre partie du tuyau de raccord (612) est située à l'extérieur du canal de vapeur (42) et est utilisée pour être raccordée à la source de vapeur.

13. Le dispositif de mélange (200) selon la revendication 1, comprenant en outre un couvercle de boîte (50b) recouvrant le corps formant boîte (20b), dans lequel la structure Venturi (40b) est disposée sur le couvercle de boîte (50b), la bande d'étanchéité (35b) est jointe à un côté intérieur de la paroi d'enceinte (202b) au moyen d'une manière étanche, de sorte à former le canal d'acheminement de liquide (43b), et le canal d'entrée de liquide (411b) est inséré vers le bas dans le canal d'acheminement de liquide (43b).

14. Le dispositif de mélange (100, 200) selon la revendication 1, comprenant en outre un tuyau d'évacuation (71a) raccordé au canal de sortie (44), dans lequel le corps formant boîte (20d) est pourvu d'une ouverture de raccordement (207) au niveau d'une position correspondant au canal de sortie (44), une partie du tuyau d'évacuation (71a) s'étend dans un côté intérieur de l'ouverture de raccordement (207), une première saillie (704) s'étendant le long d'une direction circonférentielle est disposée sur un côté extérieur du tuyau d'évacuation (71a), et la première saillie (704) est serrée sur le côté intérieur de l'ouverture de raccordement (207) ; et l'ouverture de raccordement (207) est pourvue d'une deuxième saillie (208) sur le côté intérieur, une portion en saillie (705) est disposée sur une extrémité, le long de la direction circonférentielle, de la première saillie (704), et lorsque le tuyau d'évacuation (71a) tourne autour d'un axe du canal de sortie (44) jusqu'à un angle prédéfini, la portion en saillie (705) vient en butée contre la deuxième saillie (208).

15. Une machine à café (10), comprenant le dispositif de mélange (100, 200) selon l'une quelconque des revendications 1 à 14, la machine à café (10) comprenant en outre un panneau avant (11) raccordé à un ensemble de sortie (12), et le dispositif de mélange (100, 200) étant raccordé de façon détachable au panneau avant (11) et étant situé sur un côté de l'ensemble de sortie (12).
